# EUROPEAN PATENT APPLICATION

(11) **EP 1 741 902 A2**
(43) Date of publication of application: **10.01.2007**
(21) Application number: 06013654.6
(22) Date of filing: 30.06.2006
(51) Int. Cl.: F02C 9/28, F02C 7/232

(54) **Variable jet mixer for improving the performance of a fixed displacement fuel pump**

(30) Priority: 01.07.2005 US 696016 P
(71) Applicant: Goodrich Pump & Engine Control Systems, Inc., West Hartford, CT 06133-0651 (US)
(72) Inventor: Desai, Mihir C., Yorba Linda, CA 92887 (US); Grochowski, Kurt, Wallingford, CT 06492 (US)
(74) Representative: Liska, Horst

(57) **Abstract**

The invention includes a fuel delivery system for a gas turbine engine in combination with an associated method and machine readable program. The system includes a fixed displacement pump having an inlet portion and a discharge portion, and a mixer operatively associated with the pump. The mixer includes a first inlet in fluid communication with the discharge portion of the pump for receiving a relatively high pressure bypass flow from the pump, a second inlet in fluid communication with a fuel source for receiving a relatively low pressure fuel flow from the fuel source, a mixing chamber within the mixer wherein the relatively high pressure bypass flow from the pump mixes with the relatively low pressure flow from the fuel source to generate an energized fuel mixture, and a discharge in fluid communication with the mixing chamber for directing the energized fuel mixture to the inlet of the pump.

## Description

**CROSS-REFERENCE TO RELATED APPLICATION**

This application claims the benefit of priority from U.S. Provisional Patent Application Serial No. 60/696,016 filed July 1, 2005, the disclosure of which is incorporated by reference herein in its entirety.

**BACKGROUND OF THE INVENTION**

1. **Field of the Invention**

The subject invention relates to fuel pumps for gas turbine engines, and more particularly, to a fixed or variable jet mixer for improving the thermal performance of a fixed positive displacement fuel pump.

2. **Background of the Related Art**

The use of fixed displacement pumps (e.g. gear, piston and vane type pumps) is well known within the aerospace industry. These pumps are typically used in fuel metering and actuation applications. Fixed displacement pump systems need to bypass excess fuel flow under normal operating conditions. When this flow is bypassed and there is a significant pressure rise across the positive displacement stage, there is energy present that is not being used to produce work. That unused energy is typically dissipated as heat.

Accordingly, it is submitted that there exists a need in the art for a system and method that utilizes this excess pressure energy to produce useful work. The present invention satisfies this need.

**SUMMARY OF THE INVENTION**

The purpose and advantages of the present invention will be set forth in and apparent from the description that follows. Additional advantages of the invention will be realized and attained by the methods and systems particularly pointed out in the written description and claims hereof, as well as from the appended drawing.

To achieve these and other advantages and in accordance with the purpose of the invention, as embodied herein, the invention includes a fuel delivery system for a gas turbine engine. The system includes a fixed displacement pump having an inlet portion and a discharge portion, and a mixer operatively associated with the pump. The mixer includes a first inlet in fluid communication with the discharge portion of the pump for receiving a relatively high pressure bypass flow from the pump, a second inlet in fluid communication with a fuel source for receiving a relatively low pressure fuel flow from the fuel source, a mixing chamber within the mixer wherein the relatively high pressure bypass flow from the pump mixes with the relatively low pressure flow from the fuel source to generate an energized fuel mixture, and a discharge in fluid communication with the mixing chamber for directing the energized fuel mixture to the inlet of the pump.

In accordance with a further aspect of the invention, the mixer can further include a piston mounted for movement between a first position and a second position relative to an inlet orifice of the mixing chamber. The inlet orifice may be defined between an outer surface of the piston and an interior surface of the mixer. In accordance with one embodiment of the invention, the piston defines a conical leading surface.

In accordance with another aspect of the invention, the inlet orifice can have a cross sectional area that changes when the piston moves between the first position and the second position. In accordance with one embodiment of the invention, the inlet orifice is provided with an annular shape. Preferably, the inlet orifice is provided having or is adjustable to have an optimum cross sectional area to produces a maximum pressure recovery from the pump for a given bypass flow. If desired, the fixed displacement pump may be chosen from the group consisting of a gear pump, a piston pump and a vane pump.

In accordance with still another aspect of the invention, the system may include a pressure controller for controlling an amount of bypass flow received by the mixer. The piston may be urged by a resilient member in a direction that causes the size of the inlet orifice to be decreased. In accordance with one embodiment of the invention, a first side of the piston receives a first pressure signal from a location in the fuel delivery system downstream of the pump, proximate the gas turbine engine, and a second side of the piston receives a second pressure signal from the pressure controller to urge the piston against the resilient member to control the amount of bypass flow received by the mixer. If desired, the pressure controller can receives a hydraulic pressure input signal or an electro-hydraulic pressure input signal, among others.

In accordance with another aspect of the invention, a fuel delivery system for a gas turbine engine is provided including a fixed displacement pump having an inlet portion and a discharge portion, and a mixing chamber in fluid communication with the pump and a fuel source. The mixing chamber includes means for receiving a relatively high pressure bypass flow from the pump, means for receiving a relatively low pressure fuel flow from the fuel source, means for mixing the relatively high pressure bypass flow from the pump with the relatively low pressure flow from the fuel source to generate an energized fuel mixture, and means for directing the energized fuel mixture to the inlet of the pump based on the outlet pressure of the pump.

In accordance with a further aspect of the invention, if desired, the mixing means may include a piston mounted for movement between a first position and a second position, wherein an inlet orifice of the mixing means is defined between an outer surface of the piston and an interior surface of the mixer. In accordance with one embodiment of the invention, the orifice has an annular shape. The mixing means may be adapted and configured to maximize the pressure recovery from the pump for a given bypass flow.

In still further accordance with the invention, a method of operating a fuel delivery system for a gas turbine engine is provided. The method includes directing a relatively high pressure bypass flow from a discharge portion of a fixed displacement fuel pump into a mixer, and mixing the relatively high pressure bypass flow from the fixed displacement pump with a relatively low pressure fuel flow from a fuel source in the mixer to generate an energized fuel mixture.

In accordance with a further aspect of the method of the invention, the energized fuel mixture may be directed out of the mixer and into an inlet of the fuel pump in dependence upon the outlet pressure of the pump. The amount of bypass flow entering the mixer may be regulated by a pressure controller. The pressure controller can be adapted and configured to maximize the pressure recovery from the pump for a given bypass flow.

The invention also provides a machine readable program on a computer readable medium containing instructions for controlling a fuel delivery system for a gas turbine engine including a pressure controller, a fixed displacement fuel pump and a mixer. The program includes means for operating the pressure controller to direct a relatively high pressure bypass flow from a discharge portion of the fixed displacement fuel pump into the mixer to mix the relatively high pressure bypass flow with a relatively low pressure fuel flow from a fuel source to generate an energized fuel mixture for recirculation to an inlet portion of the fixed displacement fuel pump.

In further accordance with this aspect of the invention, the means for operating the pressure controller can include instructions for supplying a pressurized fluid to the piston in the mixer to adjust the size of an inlet flow orifice to regulate the amount of the bypass flow. The means for operating the controller may include instructions that maximize the pressure recovery from the pump for a given bypass flow. The computer readable medium is preferably selected from the group consisting of a diskette, a computer chip, a computer disk drive and combinations thereof.

It is to be understood that both the foregoing general description and the following detailed description are exemplary and are intended to provide further explanation of the invention claimed.

The accompanying drawing, which is incorporated in and constitutes part of this specification, is included to illustrate and provide a further understanding of the method and system of the invention. Together with the description, the drawing serves to explain the principles of the invention.

**BRIEF DESCRIPTION OF THE DRAWING**

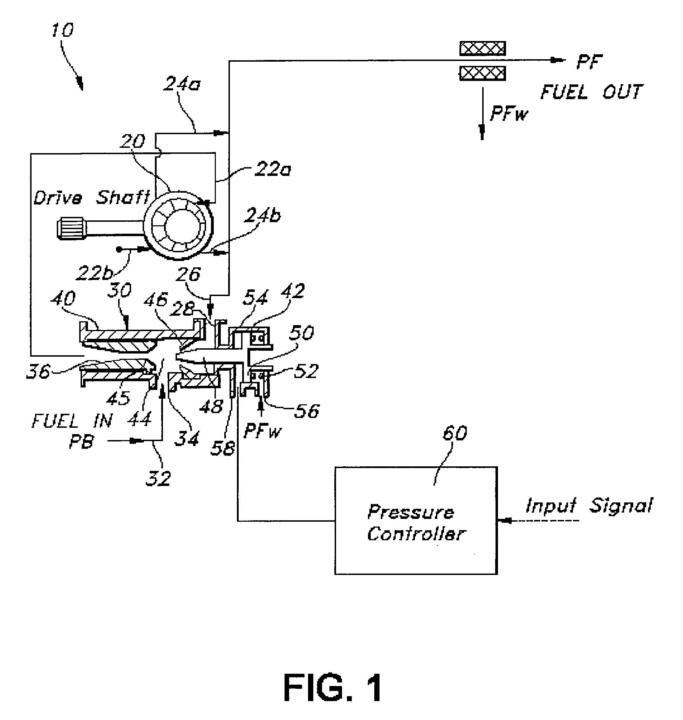

FIG. 1 is a schematic view of a representative embodiment of a fuel delivery system made in accordance with the present invention.

**ENABLING DESCRIPTION OF THE PREFERRED EMBODIMENTS**

Reference will now be made in detail to the present preferred embodiments of the invention, an example of which is illustrated in the accompanying drawings. The method and corresponding steps of the invention will be described in conjunction with the detailed description of the system.

In accordance with the subject invention, a system, method and machine readable program are provided to facilitate recirculation of bypassed fuel flow to charge a fixed or variable jet mixer that increases the inlet pressure to a positive displacement pump. This improves the thermal performance of the pump by reducing the required pressure rise across the positive displacement stage, thereby reducing shaft power of the pump.

Referring now to Fig. 1, there is illustrated a schematic representation of a fuel supply system constructed in accordance with a preferred embodiment of the subject invention and designated generally by reference numeral 10. System 10 includes a fixed positive displacement fuel pump 20 (i.e., a fixed displacement vane pump) for delivering fuel to a gas turbine engine (not shown) and a variable jet mixer 30 adapted and configured as a bypass regulator which provides a means of efficiently reducing the pressure rise across the positive displacement stage of fuel pump 20.

For purposes of this disclosure, the positive displacement fuel pump 20 is depicted and described as a fixed displacement vane pump. Those skilled in the art will readily appreciate however, that other types of fixed displacement pumps can also be employed in conjunction with the concepts of the subject invention without departing from the spirit or scope of the subject disclosure, including, for example, fixed displacement gear pumps or fixed displacement piston pumps.

Associated with fuel pump 20 are two low-pressure inlet flows 22a, 22b and two high-pressure discharge flows 24a, 24b. The two high-pressure discharge flows 24a, 24b carry the recoverable energy that is utilized by the jet mixer 30 to charge the low-pressure bypass flow associated with pump 20. More particularly, the two high-pressure pump discharge flows 24a, 24b provide a high-pressure bypass flow 26 to the jet mixer 30 that enters at inlet 28. The balance volume of the high-pressure discharge from pump 20 flows to the engine at pressure PF (i.e., Fuel Out).

The inlet flow 32 (i.e., Fuel In), which is at a relatively low pressure P_{B}, typically equal to tank pressure, enters jet mixer 30 at inlet 34. The high-pressure bypass flow 26 serves to energize or otherwise charge the low-pressure inlet flow 32. This energizes the flow, which is subsequently discharged from the outlet 36 of jet mixer 30, and then delivered to the inlet of the pump 20, e.g., as low-pressure inlet flow 22a. Thus the energy associated with the bypass flow 26 from the pump 20, which is normally dissipated as heat in prior art systems, is utilized to boost the pressure of the inlet flow 32. A goal of this improvement is to reduce the pressure rise across the pump 20, and thus reduce the horsepower produced thereby. This results in better thermal performance.

As depicted, the jet mixer 30 includes a downstream inductor section 40 and an upstream variable regulating valve section 42. The inductor section 40 defines the high-pressure inlet 28 and the low-pressure inlet 34. A mixing chamber 44 is defined within the inductor section 40 to allow the high-pressure bypass flow 26 to merge with the low-pressure inlet flow 32. Mixing chamber 44 has an expanding outlet portion 45 and a variable inlet orifice 46. More particularly, as the bypass flow 26 varies (based upon flow demand by external system requirements), the inlet orifice 46 varies in size to accommodate the required flow. The size of the orifice 46 is varied by way of a regulating valve 48 and an associated half area piston 50.

In use, when pump 20 is operating at or near maximum output, there will be a relatively low volume of bypass flow, and thus the volume of the mixing chamber 44 and area of annular orifice 46 would by decreased. Accordingly, piston 50 moves to the left (as depicted in FIG. 1), so that the nozzle area into the mixing chamber 44 is decreased.

In contrast, when pump 20 is operating at or near a minimum output condition, there will be a relatively high volume of bypass flow 26. In response, the size of annular orifice 46 and the volume of mixing chamber 44 are increased to accommodate the increased bypass flow by moving piston 50 to the right.

In accordance with a further aspect of the invention, the half area piston 50 can be biased toward a closed condition of the orifice (i.e., toward the left hand side of valve section 42 in FIG. 1). This can be accomplished, for example, by a coiled spring 52 supported within piston chamber 54. Piston 50 accordingly senses two input pressures, which balance the forces within the piston chamber 54 to maintain the proper position of the piston 50 relative to system fuel flow demands. The first input pressure sensed by piston 50 is a reference pressure PF_{w}. This reference pressure is derived from the screened fuel flow output of pump 20, and it enters the piston chamber 54 at inlet 56. The second input pressure sensed by piston 50 is a pressure signal received at inlet 58, which is provided by a pressure controller 60.

Pressure controller 60, which can be adapted to operate based on either a hydraulic input signal or an electro-hydraulic input signal, supplies a pressure bias across piston 50 that positions the valve 48 at the optimum position for the particular operating condition of the system. Moreover, the optimum position of valve 48 is that which produces the highest pressure recovery for the given bypass flow 26. The amount of bypass flow 26 is determined by the system flow demand and the speed of the fixed displacement pump 20.

The invention also provides a machine readable program on a computer readable medium containing instructions for controlling a fuel delivery system for a gas turbine engine including a pressure controller, a fixed displacement fuel pump and a mixer.

For purposes of illustration and not limitation, as embodied herein, the program includes means for operating a pressure controller (e.g., 60) as described herein to direct a relatively high pressure bypass flow from discharge portion of a fixed displacement fuel pump (e.g., 20) into a mixer (e.g., 30) to mix the relatively high pressure bypass flow with a relatively low pressure fuel flow from a fuel source to generate an energized fuel mixture for recirculation to an inlet portion of the fixed displacement fuel pump.

In further accordance with this aspect of the invention, the means for operating the pressure controller can include instructions for supplying a pressurized fluid to a piston (e.g., 50) in the mixer to adjust the size of an inlet flow orifice to regulate the amount of the bypass flow. The means for operating the pressure controller may include instructions that maximize the pressure recovery from the pump for a given bypass flow. The computer readable medium is preferably selected from the group consisting of a diskette, a computer chip, a computer disk drive and combinations thereof as well as others known in the art. The machine readable program can be written in conventional languages as known in the art, and will cause the pressure controller 60 to create a desired pressure differential across piston 50 to control the amount of bypass flow entering mixer 30.

While the system of the subject invention have been described with respect to preferred embodiments, those skilled in the art will readily appreciate that modifications and/or changes may be made thereto, without departing from the spirit or scope of the subject invention.

The invention includes a fuel delivery system for a gas turbine engine in combination with an associated method and machine readable program. The system includes a fixed displacement pump having an inlet portion and a discharge portion, and a mixer operatively associated with the pump. The mixer includes a first inlet in fluid communication with the discharge portion of the pump for receiving a relatively high pressure bypass flow from the pump, a second inlet in fluid communication with a fuel source for receiving a relatively low pressure fuel flow from the fuel source, a mixing chamber within the mixer wherein the relatively high pressure bypass flow from the pump mixes with the relatively low pressure flow from the fuel source to generate an energized fuel mixture, and a discharge in fluid communication with the mixing chamber for directing the energized fuel mixture to the inlet of the pump.

## Claims

1. A fuel delivery system for a gas turbine engine, comprising:
a) a fixed displacement pump having an inlet portion and a discharge portion; and
b) a mixer operatively associated with the pump, the mixer having:
i) a first inlet in fluid communication with the discharge portion of the pump for receiving a relatively high pressure bypass flow from the pump;
ii) a second inlet in fluid communication with a fuel source for receiving a relatively low pressure fuel flow from the fuel source;
iii) a mixing chamber within the mixer wherein the relatively high pressure bypass flow from the pump mixes with the relatively low pressure flow from the fuel source to generate an energized fuel mixture; and
iii) a discharge in fluid communication with the mixing chamber for directing the energized fuel mixture to the inlet of the pump.

2. The fuel delivery system of claim 1, wherein the mixer further includes a piston mounted for movement between a first position and a second position relative to an inlet orifice of the mixing chamber.

3. The fuel delivery system of claim 2, wherein the inlet orifice is defined between an outer surface of the piston and an interior surface of the mixer.

4. The fuel delivery system of claim 2, wherein the piston defines a conical leading surface.

5. The fuel delivery system of claim 2, wherein the inlet orifice has a cross sectional area that changes when the piston moves between the first position and the second position.

6. The fuel delivery system of claim 3, wherein the inlet orifice has an annular shape.

7. The fuel delivery system of claim 2, wherein the inlet orifice has an optimum cross sectional area that produces a maximum pressure recovery from the pump for a given bypass flow.

8. The fuel delivery system of claim 1, wherein the fixed displacement pump is chosen from the group consisting of a gear pump, a piston pump and a vane pump.

9. The fuel delivery system of claim 2, further comprising a pressure controller for controlling an amount of bypass flow received by the mixer.

10. The fuel delivery system of claim 9, wherein the piston is urged by a resilient member in a direction that causes the size of the inlet orifice to be decreased.

11. The fuel delivery system of claim 10, wherein:
a) a first side of the piston receives a first pressure signal from a location in the fuel delivery system downstream of the pump, proximate the gas turbine engine, and
b) a second side of the piston receives a second pressure signal from the pressure controller to urge the piston against the resilient member to control the amount of bypass flow received by the mixer.

12. The fuel delivery system of claim 9, wherein the pressure controller receives a hydraulic pressure input signal.

13. The fuel delivery system of claim 9, wherein the pressure controller receives an electro-hydraulic pressure input signal.

14. A fuel delivery system for a gas turbine engine, comprising:
a) a fixed displacement pump having an inlet portion and a discharge portion; and
b) a mixing chamber in fluid communication with the pump and a fuel source, the mixing chamber including:
i) means for receiving a relatively high pressure bypass flow from the pump;
ii) means for receiving a relatively low pressure fuel flow from the fuel source;
iii) means for mixing the relatively high pressure bypass flow from the pump with the relatively low pressure flow from the fuel source to generate an energized fuel mixture; and
iii) means for directing the energized fuel mixture to the inlet of the pump based on the outlet pressure of the pump.

15. The fuel delivery system of claim 14, wherein the mixing means includes a piston mounted for movement between a first position and a second position, wherein an inlet orifice of the mixing means is defined between an outer surface of the piston and an interior surface of the mixer.

16. The fuel delivery system of claim 15, wherein the orifice has an annular shape.

17. The fuel delivery system of claim 14, wherein the mixing means is adapted and configured to maximize the pressure recovery from the pump for a given bypass flow.

18. A method of operating a fuel delivery system for a gas turbine engine, comprising:
a) directing a relatively high pressure bypass flow from a discharge portion of a fixed displacement fuel pump into a mixer; and
b) mixing the relatively high pressure bypass flow from the fixed displacement pump with a relatively low pressure fuel flow from a fuel source in the mixer to generate an energized fuel mixture.

19. The method of claim 18, further comprising directing the energized fuel mixture out of the mixer and into an inlet of the fuel pump in dependence upon the outlet pressure of the pump.

20. The method of claim 18, wherein the amount of bypass flow entering the mixer is regulated by a pressure controller.

21. The method of claim 20, wherein the pressure controller is adapted and configured to maximize the pressure recovery from the pump for a given bypass flow.

22. A machine readable program on a computer readable medium containing instructions for controlling a fuel delivery system for a gas turbine engine including a pressure controller, a fixed displacement fuel pump and a mixer, wherein the program comprises:
a) means for operating the pressure controller to direct a relatively high pressure bypass flow from a discharge portion of the fixed displacement fuel pump into the mixer to mix the relatively high pressure bypass flow with a relatively low pressure fuel flow from a fuel source to generate an energized fuel mixture for recirculation to an inlet portion of the fixed displacement fuel pump.

23. The machine readable program of claim 22, wherein the means for operating the pressure controller includes instructions for supplying a pressurized fluid to the piston in the mixer to adjust the size of an inlet flow orifice to regulate the amount of the bypass flow.

24. The machine readable program of claim 22 or 23, wherein the means for operating the controller includes instructions that maximize the pressure recovery from the pump for a given bypass flow.

25. The machine readable program any one of claims 22 to 24, wherein the computer readable medium is selected from the group consisting of a diskette, a computer chip, a computer disk drive and combinations thereof.
